# EUROPEAN PATENT SPECIFICATION

(11) **EP 0 837 244 B1**
(45) Date of publication and mention of the grant of the patent: **31.07.2002**
(21) Application number: 96830526.8
(22) Date of filing: 15.10.1996
(51) Int. Cl.: F04D 29/26, F16D 1/08

(54) **A device for fixing a fan to a drive shaft in air-conditioning equipment**
Einrichtung zum Befestigen eines Lüfters auf einer Antriebswelle in Klimaanlagen
Dispositif de fixation d'un ventilateur sur un arbre d'entraînement dans systèmes de conditionnement d'air

(43) Date of publication of application: 22.04.1998
(73) Proprietor: AERMEC S.p.A., 37040 Bevilacqua (Verona) (IT)
(72) Inventor: Riello, Valerio Giordano, 37040 Bevilacqua (Verona) (IT)
(74) Representative: Perani, Aurelio

(56) References cited:
- EP-A- 0 384 901
- FR-A- 2 351 309
- US-A- 2 869 651
- US-A- 4 110 054
- US-A- 4 883 408
- US-A- 4 943 209

## Description

The present invention relates to a device for fixing a fan to a drive shaft in air-conditioning equipment such as, for example, fan convectors.

Air-conditioning equipment, operating by heat-exchange, comprises a ventilation device which conveys air from the atmosphere into the heat exchanger. This ventilation device comprises a drive shaft, generally made of steel, to which a fan is fixed for conveying the air into the conditioner. The fan, which is generally made of plastics material, comprises a central hole in which an aluminium hub is fixed. The fan, with the hub, is then fixed firmly to the drive shaft by means of a grub screw which generally involves a flattening of the shaft and hence an imbalance for which the weight of the grub screw does not compensate. Alternatively the fan may be fixed firmly to the drive shaft by means of a fixing device as disclosed in US-A-2,869,651, wherein a hub integrated with the fan is mounted to a flattened shaft, and wherein a spring clip is clamped directly on said hub.

The ventilation device just described has many disadvantages; the poor dynamic balance of these ventilation devices makes them extremely noisy and susceptible to heavy wear of the various components of which they are made. Moreover, since a rigid structure is involved, this enables electromagnetic vibrations to be transmitted from the motor to the fan, contributing to a further increase in noise. This disadvantage is considerable in view of the fact that these ventilation devices are normally used in enclosed spaces such as houses, offices, hotel rooms and the like, where an almost total absence of noise pollution is required.

The problem upon which the invention is based is therefore to provide a device for fixing fans in air-conditioning equipment which overcomes the aforementioned problems.

The problem is solved, according to the invention, by means of a device for fixing a fan to a drive shaft in air-conditioning equipment, comprising a hub integrated with the fan and keyed to the drive shaft, a ring fitted coaxially on the hub, and a spring clip mounted on and surrounding the ring.

The fan and the hub are advantageously made of plastics material and are formed in one piece. Moreover, the hub advantageously comprises a circular arrangement of resiliently yielding tongues for fixing to the drive shaft.

The ring is advantageously made of EPDM (ethylene propylene terpolymer) with anti-aging treatment to maintain the elastic memory of the material.

A further aspect: of the present invention consists of the fact that the spring clip comprises a projection, a hook element, and two protruding portions which make the clip more resilient. Moreover, close to the protrusions, the clip comprises regions in which material has been removed in order to distribute the mass more homogeneously relative to the centre of rotation. The spring clip is preferably made of stainless steel.

For a better understanding of the invention, an embodiment thereof will now be described way of nonlimiting example, with reference to the appended drawings, in which:

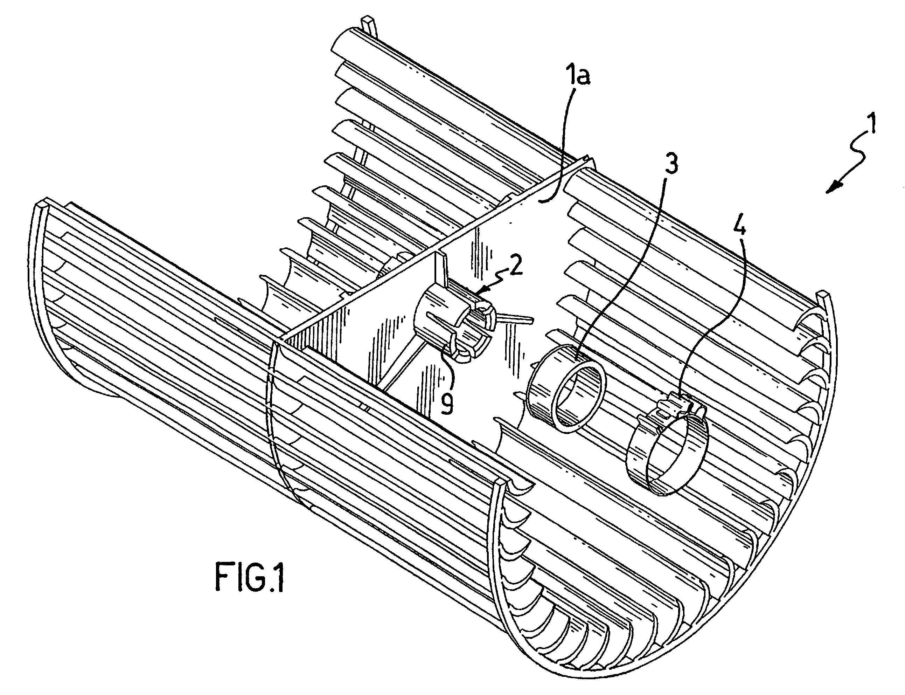

Figure 1 is an exploded, perspective view of the fixing device according to the invention,
Figure 2 is a front view of the clip shown in Figure 1,
Figure 2a is a section through a detail of Figure 2, and
Figure 3 is a schematic section of the drive shaft and of the fixing device according to the invention.

With reference to the appended drawings, the fan, generally indicated 1 and made of plastics material, comprises a hub 2 formed integrally with the fan 1 and comprising a circular arrangement 9 of resiliently yielding tongues extending axially and projecting from the transverse stiffening portion 1a of the fan for resilient fixing to a drive shaft 11.

In an alternative embodiment, the hub 2 is a separate part and is fixed to the fan 1 by, for example, force fitting.

A rubber ring 3 is fitted coaxially on the hub 2; in the embodiment shown, the rubber is constituted by EPDM to which anti-aging agents are added to improve the fixing of the elastic memory of the material which is subject to compression stress.

Finally, the hub 2 and the rubber ring 3 are surrounded by a spring clip 4, which, in the embodiment shown, is made of stainless steel.

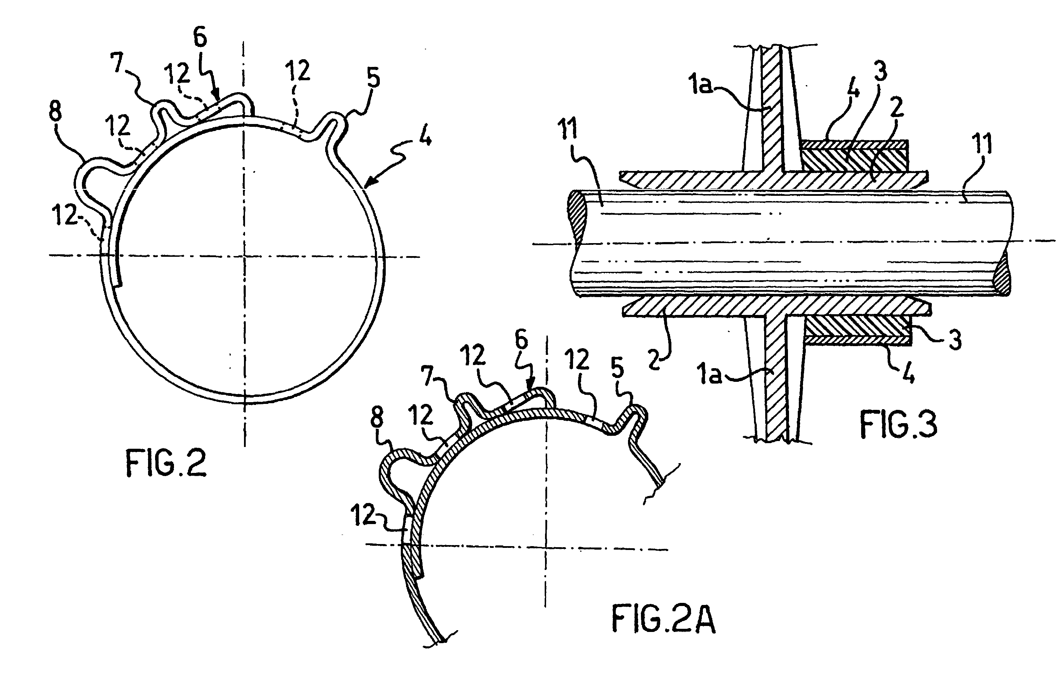

The spring clip 4 (Figure 2) comprises a projection 5 and a hook portion 6, the end of which comes into engagement with the projection 5. The hook portion 6 also comprises two protruding portions 7 and 8 for providing resilience to the hook portion. As can be seen in Figure 2a, holes 12 are formed in the hook portion 6 and close to the projection 5; the removal of material from these regions in fact considerably improves the overall balance of the clip 4 in rotation.

The fixing device according to the present invention imparts to the hub of the fan a concentric radial thrust sufficient to fix the fan to the drive shaft firmly but, by virtue of the ring 3, not rigidly. This prevents the transmission of vibrations from the electric motor to the shaft and to the fan, thus considerably reducing the noise which itself is amplified owing to the bell effect. The reduction of vibrations also increases the average life of the parts which make up the ventilation device since premature wear of various components such as, for example, the bearings supporting the shaft, is prevented.

Moreover, the insertion of the ring in the connection between the drive shaft and the fan permits the use of the spring clip of the type described above, considerably improving the dynamic balance of the entire assembly in rotation since, unlike an assembly with fixing by means of a grub screw, the weights of the components of the fixing device according to the present invention are distributed substantially uniformly around the entire perimeter of the cross-section of the drive shaft.

In particular, in the structural variant of the clip shown in Figure 2, compensation for the unbalanced weight due to the protrusions 5, 7 and 8 is achieved by the removal of material in their vicinity.

## Claims

1. A device for fixing a fan (1) to a drive shaft (11) in air-conditioning equipment, comprising a hub (2) integrated with the fan and keyed to the drive shaft (11), a ring (3) fitted coaxially on the hub (2), and a spring clip (4) mounted on and surrounding the ring (3).

2. A device according to Claim 1, **characterized in that** the fan (1) and the hub (2) are made of plastics material and are formed in one piece.

3. A device according to Claim 1 or Claim 2, **characterized in that** the hub (2) comprises a circular arrangement (9) of resiliently yielding tongues for fixing to the drive shaft (11).

4. A device according to any one of the preceding claims, **characterized in that** the ring (3) is made of EPDM (ethylene propylene terpolymer).

5. A device according to any one of the preceding claims, **characterized in that** the spring clip (4) comprises a projection (5) and a hook element (6).

6. A device according to Claim 5, **characterized in that** the clip (4) comprises protrusions (7) and (8) for improving resilience.

7. A device according to Claim 4 or Claim 5, **characterized in that** the clip (4) is made of stainless steel.

## Patentansprüche

1. Einrichtung zum Befestigen eines Lüfters (1) auf einer Antriebswelle (11) in Klimaanlagen, mit einer Nabe (2), die im Lüfter (1) integriert und auf der Antriebswelle (11) aufgekeilt ist, einem Ring (3), der koaxial auf der Nabe (2) aufgepasst ist, und einer Quetschklemme (4), die auf dem Ring (3) angebracht ist und diesen umgibt.

2. Einrichtung nach Anspruch 1, **dadurch gekennzeichnet, dass** der Lüfter (1) und die Nabe (2) aus Kunststoff sind und in einem Stück gebildet sind.

3. Einrichtung nach Anspruch 1 oder 2, **dadurch gekennzeichnet, dass** die Nabe (2) für ihre Befestigung auf der Antriebswelle (11) eine kreisförmige Anordnung (9) elastisch nachgebender Zungen umfasst.

4. Einrichtung nach einem der vorhergehenden Ansprüche, **dadurch gekennzeichnet, dass** der Ring (3) aus einem Ethylen-Propylen-Terpolymer hergestellt ist.

5. Einrichtung nach einem der vorhergehenden Ansprüche, **dadurch gekennzeichnet, dass** die Quetschklemme (4) einen Vorsprung (5) und ein Hakenelement (6) umfasst.

6. Einrichtung nach Anspruch 5, **dadurch gekennzeichnet, dass** die Quetschklemme (4) zur Verbesserung der Elastizität Auswölbungen (7, 8) umfasst.

7. Einrichtung nach Anspruch 4 oder 5, **dadurch gekennzeichnet, dass** die Quetschklemme (4) aus rostfreiem Stahl hergestellt ist.

## Revendications

1. Dispositif de fixation d'un ventilateur (1) à un arbre d'entraînement (11) de systèmes de conditionnement d'air, comprenant un moyeu (2) intégré au ventilateur et claveté sur l'arbre d'entraînement (11), un anneau (3) disposé de manière coaxiale sur le moyeu (2), et une attache rapide à ressort (4) montée sur l'anneau (3) et entourant celui-ci.

2. Dispositif selon la revendication 1, **caractérisé en ce que** le ventilateur (1) et le moyeu (2) sont constitués d'un matériau en plastique et sont formés d'une seule pièce.

3. Dispositif selon la revendication 1 ou 2, **caractérisé en ce que** le moyeu (2) comprend un agencement circulaire (9) de languettes déformables élastiquement qui sont destinées à fixer celui-ci à l'arbre d'entraînement (11).

4. Dispositif selon l'une quelconque des revendications précédentes, **caractérisé en ce que** l'anneau (3) est constitué d'EPDM (éthylène propylène terpolymère).

5. Dispositif selon l'une quelconque des revendications précédentes, **caractérisé en ce que** l'attache rapide à ressort (4) comprend une saillie (5) et un élément à crochet (6).

6. Dispositif selon la revendication 5, **caractérisé en ce que** l'attache rapide (4) comprend des saillies (7) et (8) destinées à améliorer l'élasticité.

7. Dispositif selon la revendication 4 ou 5, **caractérisé en ce que** l'attache rapide (4) est en acier inoxydable.
